# FASCICULE DE BREVET EUROPEEN

(11) **EP 2 766 662 B1**
(45) Date de publication et mention de la délivrance du brevet: **02.12.2020**
(21) Numéro de dépôt: 12781375.6
(22) Date de dépôt: 09.10.2012
(51) Int. Cl.: F28D 7/16, F28F 1/16, F28F 1/36, F23C 6/04, F28D 7/06, F28F 9/22

(54) **DISPOSITIF D'ECHAUFFEMENT D'UN FLUIDE**
VORRICHTUNG ZUM ERWÄRMEN EINES FLUIDS
DEVICE FOR HEATING A FLUID

(30) Priorité: 11.10.2011 FR 1159142
(43) Date de publication de la demande: 20.08.2014
(73) Titulaire: ArianeGroup SAS, 75015 Paris (FR)
(72) Inventeur: VUILLAMY, Didier, F-76230 Quincampoix (FR); BARTHOULOT, Jean-Luc, F-27510 Panilleuse (FR); SANNINO, Jean-Michel, F-27950 Saint Marcel (FR)
(74) Mandataire: Cabinet Beau de Loménie
(86) Numéro de dépôt international: PCT/FR2012/052286
(87) Numéro de publication internationale: WO 2013/054031

(56) Documents cités:
- DE-A1- 3 903 687
- FR-A1- 2 825 135

## Description

### DOMAINE DE L'INVENTION

L'invention concerne un dispositif de d'échauffement d'un fluide permettant de chauffer un fluide liquéfié, notamment pour le vaporiser et le surchauffer ; elle concerne également un lanceur de fusée comprenant un tel dispositif. DE 3903687A1 montre un tel dispositif.

Un tel dispositif peut être utilisé en particulier pour vaporiser un fluide dont on souhaite utiliser la forme gazeuse : ce dispositif peut typiquement être utilisé dans un lanceur de fusée pour pressuriser un ergol liquéfié avant son injection dans la chambre de combustion.

### ETAT DE LA TECHNIQUE ANTERIEURE

Dans de nombreux lanceurs de fusée, les ergols utilisés pour la propulsion sont des liquides, typiquement du dihydrogène liquide (LH2) et du dioxygène liquide (LO2), et sont donc stockés à l'état liquide dans des réservoirs. Dans de tels lanceurs, les réservoirs de ces ergols liquéfiés sont normalement dépressurisés pendant les phases de vol balistiques ; toutefois, si le propulseur doit être redémarré après une telle phase balistique, les réservoirs d'ergol liquéfié doivent être repressurisé pour que la pression des ergols soit conforme aux conditions d'alimentation du moteur.

Pour réaliser cette pressurisation, il est avantageux d'utiliser une pressurisation autogène réalisée par le prélèvement et la gazéification d'une part de chaque ergol que l'on réinjecte sous forme gazeuse au sommet de son réservoir. Cette pressurisation autogène permet d'éviter l'emport de dispositifs de pressurisation spécifiques, typiquement un réservoir d'hélium gazeux à haute pression, réduisant ainsi la masse d'emport.

Il est habituel pour cela de faire passer un ergol liquéfié dans un échangeur alimenté en gaz chauds par un brûleur réalisant la combustion de deux ergols, typiquement les deux ergols également utilisés pour la propulsion. Toutefois, cette combustion étant très exothermique, il n'est pas possible de la réaliser dans les conditions stœchiométriques car la combustion libèrerait alors trop de chaleur ce qui conduirait à des températures trop élevées endommageant les matériaux du brûleur ou de l'échangeur.

Le procédé habituel emploie alors des rapports de mélange s'éloignant de ces conditions stœchiométriques : les températures atteintes restent ainsi supportables par les matériaux mais une part importante d'un des ergols utilisés reste imbrûlée et se perd dans les gaz issus de la combustion. Le rendement d'un tel procédé est donc assez faible : une part importante d'ergol est ainsi emportée pour être finalement perdue. Vu les contraintes en termes de masse et de volume d'un tel lanceur, on comprend qu'un tel procédé n'est pas satisfaisant.

Il existe donc un réel besoin pour un dispositif de gazéification d'un fluide qui soit dépourvu des inconvénients inhérents au dispositif connu précité.

### PRESENTATION DE L'INVENTION

La présente invention concerne un dispositif d'échauffement d'un fluide tel que décrit dans la revendication 1.

Les gaz brûlés issus de chacune des combustions circulent dans des tubes pour gaz brûlés au sein d'un même échangeur global composé desdites unités d'échangeur dans lequel ils cèdent de la chaleur au fluide, ce dernier circulant entre les tubes pour gaz brûlés.

De cette manière, si la première combustion n'a pas été réalisée dans les conditions stœchiométrique, et donc si de l'ergol en excès imbrulé est présent dans les premiers gaz brûlés, il est possible de consommer une part de cet ergol imbrûlé dans la deuxième unité de brûleur en réalisant sa combustion avec l'ergol limitant : la part d'ergol en excès perdue est donc réduite d'autant.

Cette seconde combustion est possible car les premiers gaz brûlés ont cédé de la chaleur au fluide dans la première unité d'échangeur et se sont donc refroidis. Il est alors possible de les réchauffer dans la deuxième unité de brûleur jusqu'à la température de sortie de la première unité de brûleur par exemple.

Le rendement total du dispositif est ainsi plus important puisque moins d'ergol en excès est perdu à l'issu de la seconde combustion. A quantité de chaleur produite constante, on consomme donc moins d'ergol, ce qui est un gain économique direct, et on diminue l'emport d'ergol, ce qui réduit le volume de stockage et surtout la masse emportée, ce qui est un gain économique indirect important.

De plus, à quantité de chaleur nécessaire à la vaporisation et à la surchauffe du fluide donnée, on va pouvoir répartir cette production de chaleur entre deux brûleurs. En particulier, ceci permet de régler les combustions successives de manière à obtenir des températures moins contraignantes pour les matériaux. Ceci peut permettre également de réduire la taille, et donc la masse, de chaque brûleur. Même si la masse totale du dispositif peut augmenter, cette augmentation est compensée par le gain de masse en ergol évoqué plus haut.

Le présent exposé décrit principalement une utilisation destinée à vaporiser et éventuellement surchauffer un fluide initialement liquéfié : il va de soi que la présente invention concerne également les utilisations dans lesquelles les conditions thermodynamiques de criticité sont dépassées et donc dans lesquelles le fluide est à l'état supercritique sans qu'une vaporisation puisse être observée lors de l'échauffement. Il suffit alors de comprendre que la présente invention permet de chauffer le fluide jusqu'à la température d'utilisation souhaitée.

Dans certains modes de réalisation, le dispositif comprend une pluralité de brûleurs : dans chaque brûleur n à partir du deuxième, on injecte les n-1ième gaz brûlés issus de la n-1ième combustion d'une part et de l'ergol limitant d'autre part pour réaliser une nième combustion entre l'ergol limitant et au moins une partie de l'ergol en excès imbrûlé présent dans les n-1ème gaz brûlés ; les nième gaz brûlés issus de ladite nième combustion circulent dans une nième unité d'échangeur pour céder de la chaleur au fluide. Ces brûleurs sont chaînés ce qui permet de consommer à chaque fois une partie d'ergol en excès imbrûlé par la combustion précédente et donc de se rapprocher d'autant, au global, des conditions stœchiométriques offrant le meilleur rendement. Ceci permet également de répartir la production de chaleur entre une pluralité de combustions et donc de mieux optimiser chacune des combustions. Tous les avantages évoqués jusqu'ici sont donc amplifiés.

Dans certains modes de réalisation, le rapport de mélange de chaque combustion est réglé de telle manière que la température régnant dans le dispositif ne dépasse pas une température maximale imposée par la résistance des matériaux du dispositif. On peut chercher à s'en approcher avec une certaine marge de sécurité. Ceci permet de produire le plus de chaleur possible sans endommager les matériaux du dispositif, le brûleur et l'échangeur notamment. Cette température maximale est typiquement de l'ordre de 900 °C.

Dans certains modes de réalisation, le nombre de brûleurs et les quantités d'ergol limitant et en excès injectées dans ceux-ci sont tels que l'ergol en excès est sensiblement entièrement brûlé à l'issue de la dernière combustion. De cette manière, on a atteint les conditions stœchiométriques, et donc le rendement maximum, pour l'ensemble du dispositif.

Dans certains modes de réalisation, outre les n-1ième gaz brûlés, on n'injecte dans le nième brûleur que de l'ergol limitant : on n'injecte pas de nouveau de l'ergol en excès. Ainsi, on injecte l'ergol en excès en une fois dans le premier brûleur ce qui simplifie le circuit de distribution de l'ergol en excès.

Dans certains modes de réalisation, le dispositif comprend 5 ou 6 brûleurs. Le nombre idéal de brûleurs est issu d'un compromis entre les gains offert par une combustion supplémentaire, et donc un rendement plus élevé et une masse d'ergol emporté réduite, et les inconvénients en termes de masse et de complexité apportés par un brûleur supplémentaire. Il dépend notamment de la température maximale acceptée par les matériaux.

Dans certains modes de réalisation, le fluide est un ergol liquéfié à vaporiser et à surchauffer. Ceci est notamment le cas pour un lanceur de fusée dans lequel cet ergol vaporisé servira à la pressurisation du réservoir d'ergol liquéfié.

Dans certains modes de réalisation, cet ergol à pressuriser est la même substance que l'un des ergols limitant ou en excès. De cette manière, seuls deux ergols différents sont nécessaires ce qui simplifie largement les architectures de stockage et de distribution.

Dans certains modes de réalisation, l'ergol limitant est du dioxygène, et l'ergol en excès est du dihydrogène. Ces ergols sont très courants dans le domaine aérospatial et offrent une très bonne réactivité.

Dans certains modes de réalisation, le rapport de mélange, en masse, entre le dioxygène et le dihydrogène est égal à 1 dans le premier brûleur. Il peut atteindre 8 en globalité sur l'ensemble des brûleurs, ce qui correspondant au rapport stœchiométrique de la réaction 2 H2 + O2 = 2 H20.

Dans certains modes de réalisation, les tubes pour gaz brûlés sont à section circulaire ou rectangulaire.

Dans certains modes de réalisation, les brûleurs sont alignés le long d'un côté de l'échangeur global et les gaz brûlés circulent d'un brûleur à l'autre en traversant l'échangeur global dans des tubes pour gaz brûlés en forme de U. Ceci facilite la mise en place des brûleurs et de leurs circuits d'alimentation et de commande.

Dans certains modes de réalisation, l'échangeur global est un échangeur à calandres présentant des cloisons. Ces cloisons définissent une section de passage du fluide s'étendant dans les trois dimensions, augmentant ainsi le chemin parcouru par le fluide en contact avec les tubes pour gaz brûlés et donc les échanges de chaleur.

Dans certains modes de réalisation, l'échangeur global comporte des organes d'échanges à l'interface entre les gaz brûlés et le fluide. Ceci permet d'augmenter les surfaces d'échanges de chaleur.

Dans certains modes de réalisation, ces organes d'échange sont des ailettes hélicoïdales disposées autour et/ou à l'intérieur des tubes pour gaz brûlés. Ces ailettes accroissent les surfaces d'échange d'une part et forcent le fluide à tourner autour des tubes pour gaz brûlés ce qui accroit encore les échanges de chaleur.

Dans d'autres modes de réalisation, ces organes d'échange sont des ailettes radiales disposées autour et/ou à l'intérieur des tubes pour gaz brûlés.

Dans d'autres modes de réalisation, ces organes d'échange sont des anneaux disposés autour et/ou à l'intérieur des tubes pour gaz brûlés.

Dans certains modes de réalisation, la section des tubes pour gaz brûlés et/ou la section de passage du fluide est évolutive. Elle peut ainsi être configurée pour tenir compte des variations de masse volumique ou de débit masse et pour compenser les pertes de charge.

Dans certains modes de réalisation, l'échangeur global est composé de deux demi-carters assemblés et munis de joints. Ces deux demi-carters peuvent s'assembler en englobant les tubes pour gaz brûlés. Le montage de ce mode de réalisation est ainsi particulièrement simple.

Dans certains modes de réalisation, les gaz brûlés et le fluide circulent à contre-courant dans l'échangeur global.

Dans d'autres modes de réalisation, ceux-ci circulent en co-courant dans l'échangeur global.

Dans d'autres modes de réalisation, certaines sections de l'échangeur global sont en co-courant, d'autres à contre-courant.

Dans certains modes de réalisation, les brûleurs utilisent des injecteurs et un allumage par bougie selon un agencement semblable à celui que l'on utilise dans une automobile. N'importe quels autres types d'injection et d'allumage peuvent être utilisés.

L'invention concerne également un lanceur de fusée comprenant un dispositif d'échauffement d'un fluide conforme à l'invention.

Les caractéristiques et avantages précités, ainsi que d'autres, apparaîtront à la lecture de la description détaillée qui suit, d'exemples de réalisation du dispositif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure à l'autre, des éléments (ou parties d'élément) identiques sont repérés par les mêmes signes de référence.
La figure 1 est une vue schématique en coupe du dispositif.
La figure 2 est une vue schématique d'un tube pour gaz brûlés muni d'ailettes hélicoïdales.
La figure 3 est une vue schématique d'un tube pour gaz brûlés muni d'ailettes radiales.

### DESCRIPTION DETAILLEE D'EXEMPLES DE REALISATION

Afin de rendre plus concrète l'invention, un exemple de dispositif est décrit en détail ci-après, en référence aux dessins annexés. Il est rappelé que l'invention ne se limite pas à cet exemple.

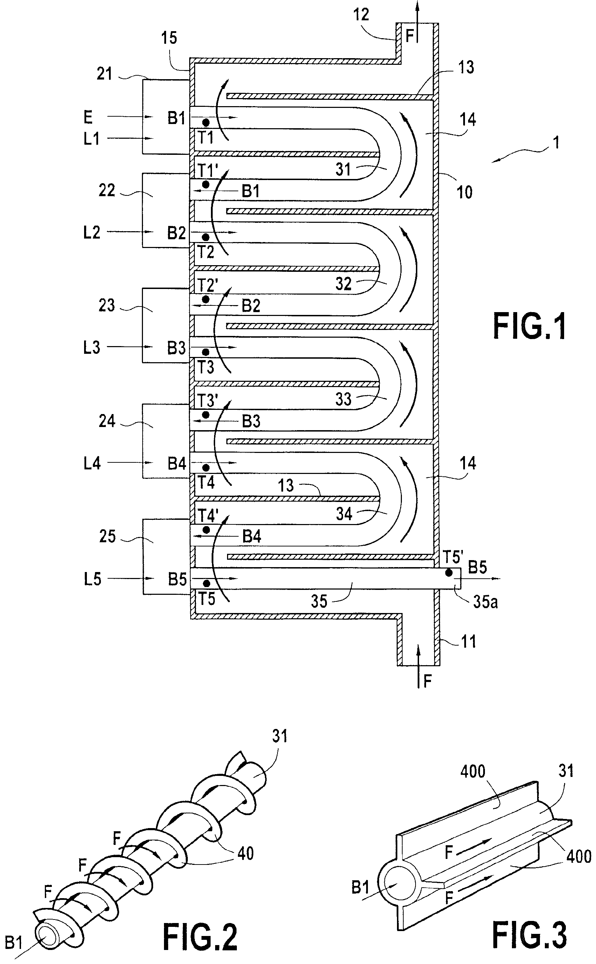

La figure 1 est une vue schématique en coupe du dispositif 1. Ce dispositif 1 comprend un échangeur global 10, un premier brûleur 21, et quatre autres brûleurs 22, 23, 24 et 25.

L'échangeur global 10 comprend un orifice d'entrée 11, un orifice de sortie 12 et une pluralité de cloisons intérieures 13. Le fluide F à vaporiser pénètre dans l'échangeur global 10 par l'orifice d'entrée 11, circule dans le passage 14 délimité par les cloisons 13, et ressort de l'échangeur global 10 par l'orifice de sortie 12. Le réseau de cloisons 13 peut être orienté de manière tridimensionnelle pour forcer le fluide F à parcourir plus de chemin dans le passage 14 entre l'orifice d'entrée 11 et l'orifice de sortie 12. Les flèches en gras de la figure 1 indiquent le parcours du fluide F dans le passage 14 de l'échangeur global 10.

Le premier brûleur 21 est disposé contre ou au voisinage d'un premier côté 15 de l'échangeur global 10. Le premier brûleur 21 est alimenté en ergol en excès E, typiquement du dihydrogène H2, et en ergol limitant L (flux L1), typiquement du dioxygène O2. La combustion de l'ergol en excès E avec l'ergol limitant L dans le premier brûleur 21 génère des premiers gaz brûlés B1 qui sont envoyés dans un premier tube pour gaz brûlés 31. Ce tube 31 est disposé au sein du passage 14 de l'échangeur global 10, à proximité de l'orifice de sortie 12. Il est en forme de U et revient en direction du premier côté 15 de l'échangeur global 10 pour déboucher dans le deuxième brûleur 22.

Dans cet exemple de réalisation, le premier tube 31 et les cloisons 13 sont agencées de telle sorte que les premiers gaz brûlés B1 et le fluide F circulent à contre-courant.

Le rapport de mélange de la première combustion dans le premier brûleur 21 est réglé de telle sorte que la température T1 des premiers gaz brûlés B1 en sortie du premier brûleur 21 soit inférieure à la température maximale admissible par les matériaux du dispositif 1. Ce rapport de mélange n'est pas stœchiométrique : il reste de l'ergol en excès E dans les premiers gaz brûlés B1.

Les premiers gaz brûlés B1 circulent dans le premier tube pour gaz brûlés 31 et cèdent de la chaleur au fluide F pour lui permettre de s'évaporer et d'être surchauffé. Les premiers gaz brûlés B1 se refroidissent alors et pénètrent dans le deuxième brûleur 22 avec une température T1' inférieure à leur température de sortie T1 du premier brûleur 21.

Le deuxième brûleur 22 est également disposé contre ou au voisinage du premier côté 15 de l'échangeur global 10. Il est situé à proximité du premier brûleur 21. Ce deuxième brûleur 22 est alimenté avec les premiers gaz brûlés B1 et de l'ergol limitant L (flux L2). La combustion de l'ergol limitant L avec l'ergol en excès E résiduel présent dans les premiers gaz brûlés B1 génère des deuxièmes gaz brûlés B2 qui sont envoyés dans un deuxième tube pour gaz brûlés 32. Ce deuxième tube 32, similaire au tube 31, est disposé au sein du passage 14 de l'échangeur global 10, en amont du premier tube pour gaz brûlés 31 et revient vers le premier côté 15 de l'échangeur global 10 pour déboucher dans le troisième brûleur 23.

Le rapport de mélange de la deuxième combustion dans le deuxième brûleur 22 est également réglé de telle sorte que, compte tenu de la température T1' des premiers gaz brûlés B1 en entrée du deuxième brûleur 22, la température T2 des deuxièmes gaz brûlés B2 en sortie du deuxième brûleur 22 soit inférieure à la température maximale admissible par les matériaux du dispositif 1. Ce rapport de mélange n'est pas stœchiométrique : il reste encore de l'ergol en excès E dans les deuxièmes gaz brûlés B2.

Les deuxièmes gaz brûlés B2 circulent dans le deuxième tube pour gaz brûlés 32 et cèdent de la chaleur au fluide F pour lui permettre de s'évaporer. Les deuxièmes gaz brûlés B2 se refroidissent alors et pénètrent dans le troisième brûleur 23 avec une température T2' inférieure à leur température de sortie T2 du deuxième brûleur 22.

Les troisième et quatrième brûleurs 23 et 24, associés à leurs troisième et quatrième tubes pour gaz brûlés 33 et 34 respectifs, sont similaires, fonctionnent de la même manière, et poursuivent les mêmes buts que le second brûleur 22 et le deuxième tube pour gaz brûlés 32 car il reste toujours de l'ergol en excès E dans les gaz brûlés.

Le cinquième et dernier brûleur 25 est disposé contre ou au voisinage du premier côté 15 de l'échangeur global 10. Il est situé au voisinage du quatrième brûleur 24, dans l'alignement des autres brûleurs. Il est alimenté avec les quatrièmes gaz brûlés B4 et de l'ergol limitant L (flux L5). La combustion de l'ergol limitant L avec l'ergol en excès E résiduel présent dans les quatrième gaz brûlés B4 génère des cinquième gaz brûlés B5 qui sont envoyés dans un cinquième tube pour gaz brûlés 35. Ce cinquième tube 35 n'est pas nécessairement en U : il est disposé au sein du passage 14 de l'échangeur global 10, en amont du quatrième tube pour gaz brûlés 34 et à proximité de l'orifice d'entrée 11 de l'échangeur global 10. Il quitte ensuite l'échangeur global 10 et libère les cinquièmes gaz brûlés B5 par un orifice de libération 35a.

Compte tenu de la température T4' des quatrièmes gaz brulés en entrée du cinquième brûleur 25, et de la petite quantité résiduelle d'ergol en excès E dans les quatrièmes gaz brûlés B4, il est possible de régler le rapport de mélange de la cinquième combustion dans le cinquième brûleur 25 de manière stœchiométrique sans dépasser la température maximale admissible par les matériaux du dispositif 1. Les ergols limitant L et en excès E sont ainsi complètement brûlés : il n'y a donc plus d'ergol en excès E dans les cinquième gaz brûlés B5.

Les cinquièmes gaz brûlés B5 circulent dans le cinquième tube pour gaz brûlés 35 et cèdent de la chaleur au fluide F pour lui permettre de s'évaporer. Les cinquièmes gaz brûlés B5 se refroidissent alors et quittent l'échangeur global 10 et le dispositif 1 par l'orifice de libération 35a. Ils peuvent faire l'objet d'une utilisation particulière dans une autre partie du lanceur : en particulier, leur impulsion ou leur température résiduelle peuvent être mises à profit.

La figure 2 représente un exemple de réalisation d'un organe d'échange qui peut être installé sur les tubes pour gaz brûlés 31 à 35 décrits ci-dessus. Une ailette hélicoïdale 40 est ainsi disposée autour d'un tube pour gaz brûlés 31. Cette ailette hélicoïdale 40 augmente la surface d'échange entre les gaz brûlés B1 d'une part et le fluide F à vaporiser d'autre part. De plus, il entraîne le fluide F en rotation autour du tube 31, accroissant ainsi la longueur du chemin parcouru à son contact. La totalité des tubes pour gaz brûlés 31 à 35 ou seulement des portions de tubes peuvent être munies de telles ailettes hélicoïdales 40.

La figure 3 représente un autre exemple de réalisation d'un organe d'échange qui peut être installé sur les tubes pour gaz brûlés 31 à 35 décrits ci-dessus. Des ailettes radiales 400 sont ainsi disposées le long d'un tube pour gaz brûlés 31. Ces ailettes radiales 400 augmentent la surface d'échange entre les gaz brûlés B1 d'une part et le fluide F à vaporiser d'autre part. Un nombre quelconque d'ailettes 400 peut être disposé autour du même tube 31 : elles peuvent être, ou non, régulièrement réparties angulairement. La totalité des tubes pour gaz brûlés 31 à 35 ou seulement des portions de tubes peuvent être munies de telles ailettes radiales 400. Il est possible d'équiper certains tubes 31 à 35 avec des ailettes hélicoïdales 40 et d'autres tubes 31 à 35 avec des ailettes radiales 400.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention telle que définie dans les revendications.

## Revendications

1. Dispositif d'échauffement d'un fluide, comprenant
un premier brûleur (21) réalisant une première combustion entre un ergol limitant (L1) et un ergol en excès (E),
une première unité d'échangeur (10, 31) dans lequel des premiers gaz brûlés (B1) issus de ladite première combustion cèdent de la chaleur au fluide (F), et
au moins un deuxième brûleur (22) dans lequel on injecte les premiers gaz brûlés d'une part (B1) et de l'ergol limitant (L2) d'autre part pour réaliser une deuxième combustion entre l'ergol limitant (L2) et au moins une partie de l'ergol en excès imbrûlé présent dans les premiers gaz brûlés (B1),
dans lequel les deuxièmes gaz brûlés (B2) issus de ladite deuxième combustion circulent dans une deuxième unité d'échangeur (10, 32) pour céder de la chaleur au fluide (F),
**caractérisé en ce qu'**il comprend en outre des tubes pour gaz brûlés, dans lesquels circulent les gaz brûlés (B1, B2) issus de chacune des combustions, prévus entre les brûleurs au sein d'un même échangeur global (10) composé desdites unités d'échangeur (10, 31, 32) dans lequel les gaz brûlés cèdent de la chaleur au fluide (F), ce dernier circulant entre les tubes pour gaz brûlés (31, 32).

2. Dispositif selon la revendication 1, **caractérisé en ce qu'**il comprend une pluralité de brûleurs (21-25),
**en ce que**, dans chaque brûleur n (23) à partir du deuxième, on injecte les n-1ième gaz brûlés (B2) issus de la n-1ième combustion d'une part et de l'ergol limitant (L3) d'autre part pour réaliser une nième combustion entre l'ergol limitant (L3) et au moins une partie de l'ergol en excès imbrûlé présent dans les n-1ème gaz brûlés (B2), et
**en ce que** les nième gaz brûlés (B3) issus de ladite nième combustion circulent dans une nième unité d'échangeur (10, 33) pour céder de la chaleur au fluide (F).

3. Dispositif selon la revendication 1 ou 2, **caractérisé en ce que** le rapport de mélange de chaque combustion est réglé de telle manière que la température (T1-T5) régnant dans le dispositif ne dépasse pas une température maximale imposée par la résistance des matériaux du dispositif (1).

4. Dispositif selon l'une quelconque des revendications 1 à 3, **caractérisé en ce que** le nombre de brûleurs (21-25) et les quantités d'ergol limitant (L1-L5) et en excès (E) injectées dans ceux-ci sont tels que l'ergol en excès est sensiblement entièrement brûlé à l'issue de la dernière combustion.

5. Dispositif selon l'une quelconque des revendications 1 à 4, **caractérisé en ce que** les brûleurs (21-25) sont alignés le long d'un côté (15) de l'échangeur global (10) et **en ce que** les gaz brûlés (B1-B4) circulent d'un brûleur (21-25) à l'autre en traversant l'échangeur global (10) dans des tubes pour gaz brûlés (31-34) en forme de U.

6. Dispositif selon l'une quelconque des revendications 1 à 5, **caractérisé en ce que** l'échangeur global (10) comporte des organes d'échange (40, 400) à l'interface entre les gaz brûlés (B1-B5) et le fluide (F).

7. Dispositif selon la revendication 6, **caractérisé en ce que** ces organes d'échange sont des ailettes hélicoïdales (40) disposées autour et/ou à l'intérieur des tubes pour gaz brûlés (31-35).

8. Dispositif selon l'une quelconque des revendications 1 à 7, **caractérisé en ce que** l'échangeur global (10) est composé de deux demi carters assemblés et munis de joints.

9. Lanceur de fusée **caractérisé en ce qu'**il comprend un dispositif d'échauffement d'un fluide (1) selon l'une quelconque des revendications précédentes.

## Patentansprüche

1. Vorrichtung zur Erwärmung eines Fluids, umfassend
einen ersten Brenner (21), der eine erste Verbrennung zwischen einem begrenzenden Treibstoff (L1) und einem überschüssigen Treibstoff (E) durchführt,
eine erste Wärmetauscheinheit (10, 31), in welcher erste Verbrennungsgase (B1), die bei der ersten Verbrennung ausgegeben werden, Wärme an das Fluid (F) abgeben, und
zumindest einen zweiten Brenner (22), in welchen die ersten Verbrennungsgase einerseits (B1) und der begrenzende Treibstoff (L2) andererseits eingespritzt werden, um eine zweite Verbrennung zwischen dem begrenzenden Treibstoff (L2) und zumindest einem Teil des unverbrannten überschüssigen Treibstoffs, der in den ersten Verbrennungsgasen (B1) vorliegt, durchzuführen,
wobei die zweiten Verbrennungsgase (B2), die bei der zweiten Verbrennung ausgegeben werden, in einer zweiten Wärmetauscheinheit (10, 32) zirkulieren, um Wärme an das Fluid (F) abzugeben,
**dadurch gekennzeichnet, dass** sie ferner Rohre für Verbrennungsgase umfasst, in welchen die Verbrennungsgase (B1, B2), die bei jeder der Verbrennungen ausgegeben werden, zirkulieren, und die zwischen den Brennern innerhalb eines selben Gesamtwärmetauschers (10) vorgesehen sind, der aus den Wärmetauscheinheiten (10, 31, 32) zusammengesetzt ist, wobei die Verbrennungsgase Wärme an das Fluid (F) abgeben, wobei letzteres zwischen den Rohren für Verbrennungsgase (31, 32) zirkuliert.

2. Vorrichtung nach Anspruch 1, **dadurch gekennzeichnet, dass** sie mehrere Brenner (21-25) umfasst,
dass in jedem Brenner n (23) beginnend mit dem zweiten (Brenner) die (n-1)-ten Verbrennungsgase (B2), die bei der (n-1)-ten Verbrennung ausgegeben werden, einerseits und der begrenzende Treibstoff (L3) andererseits eingespritzt werden, um eine n-te Verbrennung zwischen dem begrenzenden Treibstoff (L3) und zumindest einem Teil des unverbrannten überschüssigen Treibstoffs, der in den (n-1)-ten Verbrennungsgasen (B2) vorliegt, durchzuführen, und
dass die n-ten Verbrennungsgase (B3), die bei der n-ten Verbrennung ausgegeben werden, in einer n-ten Wärmetauscheinheit (10, 33) zirkulieren, um Wärme an das Fluid (F) abzugeben.

3. Vorrichtung nach Anspruch 1 oder 2, **dadurch gekennzeichnet, dass** das Mischungsverhältnis jeder Verbrennung auf solche Weise geregelt ist, dass die Temperatur (T1-T5), die in der Vorrichtung herrscht, eine maximale Temperatur, die durch die Beständigkeit der Materialien der Vorrichtung (1) diktiert wird, nicht überschreitet.

4. Vorrichtung nach einem der Ansprüche 1 bis 3, **dadurch gekennzeichnet, dass** die Anzahl der Brenner (21-25) und die Mengen des begrenzenden (L1-L5) und des überschüssigen Treibstoffs (E), die in sie eingespritzt werden, derart sind, dass der überschüssige Treibstoff am Ausgang der letzten Verbrennung im Wesentlichen vollständig verbrannt ist.

5. Vorrichtung nach einem der Ansprüche 1 bis 4, **dadurch gekennzeichnet, dass** die Brenner (21-25) entlang einer Seite (15) des Gesamtwärmetauschers (10) ausgerichtet sind, und dass die Verbrennungsgase (B1-B4) von einem Brenner (21-25) zu dem anderen zirkulieren, indem sie den Gesamtwärmetauscher (10) in den Rohren für Verbrennungsgase (31-34) in U-Form durchlaufen.

6. Vorrichtung nach einem der Ansprüche 1 bis 5, **dadurch gekennzeichnet, dass** der Gesamtwärmetauscher (10) Wärmetauschorgane (40, 400) an der Schnittstelle zwischen den Verbrennungsgasen (B1-B5) und dem Fluid (F) beinhaltet.

7. Vorrichtung nach Anspruch 6, **dadurch gekennzeichnet, dass** diese Wärmetauschorgane spiralförmige Flügel (40) sind, die um die und/oder innerhalb der Rohre für Verbrennungsgase (31-35) angeordnet sind.

8. Vorrichtung nach einem der Ansprüche 1 bis 7, **dadurch gekennzeichnet, dass** der Gesamtwärmetauscher (10) aus zwei Gehäusehälften besteht, die zusammengebaut und mit Dichtungen versehen sind.

9. Raketenabschussrampe, **dadurch gekennzeichnet, dass** sie eine Vorrichtung zur Erwärmung eines Fluids (1) nach einem der vorhergehenden Ansprüche umfasst.

## Claims

1. A device for heating a fluid, the device comprising:
a first burner (21) performing first combustion between a limiting propellant (L1) and an excess propellant (E);
a first heat exchange unit (10, 31) in which first burnt gas (B1) from said first combustion transfers heat to the fluid (F); and
at least one second burner (22) into which both the first burnt gas (B1) and some limiting propellant (L2) are injected in order to perform second combustion between the limiting propellant (L2) and at least a portion of the unburnt excess propellant present in the first burnt gas (B1);
in which the second burnt gas (B2) from said second combustion flows through a second heat exchange unit (10, 32) in order to transfer heat to the fluid (F); and
the device being **characterized in that** the burnt gas (B1, B2) from each of the combustions flows in respective burnt gas tubes (31, 32) within a common overall heat exchanger (10) made up of said heat exchange units (10, 31, 32) and in which the gas transfers heat to the fluid (F), the fluid flowing between the burnt gas tubes (31, 32) .

2. A device according to claim 1, **characterized in that** it has a plurality of burners (21-25);
**in that**, into each burner (23) of number n starting from the second, the (n-1)^{th} burnt gas (B2) from the (n-1)^{th} combustion is injected together with some limiting propellant (L3) in order to perform n^{th} combustion between the limiting propellant (L3) and at least a portion of the unburnt excess propellant present in the (n-1)^{th} burnt gas (B2); and
**in that** the n^{th} burnt gas (B3) from said n^{th} combustion flows through an n^{th} heat exchange unit (10, 33) to transfer heat to the fluid (F).

3. A device according to claim 1 or claim 2, **characterized in that** the mixing ratio of each combustion is adjusted in such a manner that the temperature (T1-T5) that results in the device does not exceed a maximum temperature imposed by the heat-resistance of the materials of the device (1).

4. A device according to any one of claims 1 to 3, **characterized in that** the number of burners (21-25) and the quantities of limiting propellant (L1-L5) and of excess propellant (E) injected into the burners are such that the excess propellant is substantially completely burnt after the last combustion.

5. A device according to any one of claims 1 to 4, **characterized in that** the burners (21-25) are in alignment along one side (15) of the overall heat exchanger (10) and **in that** the burnt gas (B1-B4) flows from one burner (21-25) to another by passing through the overall heat exchanger (10) in U-shaped burnt gas tubes (31-34).

6. A device according to any one of claims 1 to 5, **characterized in that** the overall heat exchanger (10) has heat exchange members (40, 400) at the interface between the burnt gas (B1-B5) and the fluid (F).

7. A device according to claim 6, **characterized in that** the heat exchange members are helical fins (40) arranged around and/or inside the burnt gas tubes (31-35).

8. A device according to any one of claims 1 to 7, **characterized in that** the overall heat exchanger (10) is made up of two half-casings that are assembled together and provided with seals.

9. A rocket launcher, **characterized in that** it includes a device for heating a fluid (1) according to any preceding claim.
